# EUROPÄISCHE PATENTANMELDUNG

(11) **EP 3 970 831 A1**
(43) Veröffentlichungstag der Anmeldung: **23.03.2022**
(21) Anmeldenummer: 21190927.0
(22) Anmeldetag: 12.08.2021
(51) Int. Cl.: B01D 39/16

(54) **VERFAHREN ZUR HERSTELLUNG VON ATEMSCHUTZMASKEN UNTER VERWENDUNG VON RECYCLIERTEM FASERMATERIAL, SOWIE ATEMSCHUTZMASKEN**

(30) Priorität: 18.09.2020 DE 102020124442
(71) Anmelder: Wolf PVG GmbH & Co. KG, 32427 Minden (DE)
(72) Erfinder: CZADO, Wolfgang, 32457 Porta Westfalica (DE)
(74) Vertreter: Dantz, Jan Henning

(57) **Zusammenfassung**

Verfahren zur Herstellung von Atemschutzmasken unter Verwendung von recyclierten Fasermaterial mit den folgenden Schritten:
A) Bereitstellen eines Materials aus zu recyclenden Fasern
B) Verteilen der Fasern auf einem Untergrund
C) Desinfizieren des Fasermaterial
D) Zuführen des Fasermaterials in einem Feinfilterbildungsprozess, wobei das desinfizierte Fasermaterial auf eine Substratlage aufgebracht wird und/oder verfestigt wird unter Ausbildung eines Feinfiltermediums;
E) Zuschnitt eines mundabdeckenden Feinfiltersegments aus dem Feinfiltermedium, sowie Ausbildung einer Atemschutzmaske aus dem vorgenannten Feinfiltersegments;
sowie eine Atemschutzmaske.

## Beschreibung

Die vorliegende Erfindung betrifft Verfahren zur Herstellung von Atemschutzmasken unter Verwendung von recycliertem Fasermaterial, auch Recyclatfasern genannt, sowie eine Atemschutzmaske.

Atemschutzmasken sind seit einigen Monaten nicht mehr aus dem Alltags- und Arbeitsleben wegzudenken. Es herrschen vielerorts gesetzliche Vorschriften zum Tragen dieser Masken in Transportmitteln, Läden, Gaststätten usw.

Neben selbstgenähten oder käuflich erworbenen Stoffmasken, welche immer wieder in der Waschmaschine gewaschen werden können, sind insbesondere Atemschutzmasken im Einsatz, welche als Einweg-Atemschutzmasken kommerziell vertrieben werden und oftmals nach einmaligen oder mehrmaligen Gebrauch entsorgt werden. Dies führt in einem nicht unerheblichen Umfang zu bakteriell, virologisch und organisch-kontaminierten Müll.

Für den hohen Bedarf an Atemschutzmasken wiederum wird im großen Umfang Fasermaterial benötigt, sei es dabei, z.B. im Bereich der medizinischen Versorgung, sogenannte FFP2-Atemschutzmasken, welche in der Lage sind auch den Nutzer selbst zu schützen oder durchlässigere Alltags-Atemschutzmasken, welche die Anforderungen für den Nutzer erfüllen.

Das hierfür benötigte Material Filtermaterial für die Atemschutzmasken muss in Vliesbildungsverfahren aufwendig hergestellt werden, wobei zumeist auch auf die hygienischen Anforderungen eines Atemschutzes bedacht werden müssen.

Es ist daher in Anbetracht der vorhergehend-geschilderten Problematik die Aufgabe der vorliegenden Erfindung, ein Herstellverfahren und eine Atemschutzmaske bereitzustellen, welche aus Umweltschutzgründen und aus Gründen einer besseren CO₂-Bilanz zumindest einen Mindestanteil an Recyclatfasern besitzt.

Diese Aufgabe wird mit einem Herstellverfahren mit den Merkmalen des Anspruchs 1 und durch eine Atemschutzmaske mit den Merkmalen des Anspruches 12 gelöst.

Das erfindungsgemäße Verfahren zur Herstellung von Atemschutzmasken unter Verwendung von recyclierten Fasermaterial bzw. Recyclatfasern weist die folgenden Schritte:

### A Bereitstellen eines Materials aus zu recyclenden Fasern

Schritt A geht von Fasermaterial aus, welches einem Recyclingprozess unterzogen wird. Das Fasermaterial kann beispielsweise, jedoch nicht beschränkt darauf, ein Textilstoff, ein Vliesstoff, ein Gewirke, Watte, eine Füllung z.B. für Kissen oder dergleichen sein. Der Vorteil dieses Ausgangsmaterials ist, dass es bereits die Faserform aufweist, welche für die Atemschutzmaske notwendig ist. Eine aufwendige Bearbeitung von natürlichen Fasern muss ebensowenig erfolgen wie eine Faserbildung von Kunststofffasern durch Verfahren wie z.B. Schmelzblasen (Meltblowing) oder dergleichen.

Da das Fasermaterial allerdings bereits einmalig einem Nutzen zugeführt wurde muss eine Kontamination ausgeschlossen werden. Zur Sicherstellung einer hygienischen Unbedenklichkeit eine Desinfizierung notwendig.

### B Verteilen der Fasern auf einem Untergrund

Hierfür muss das Fasermaterial auf einem Untergrund, z.B. einem Vliesband, verteilt werden. Bei verflochtenen Fasern, z.B. Textilien, sollten die Fasern in diesem entflochten werden und ggf. sogar gebrochen um eine Entflechtung zu erleichtern. Dies kann z.B. durch eine Kämmmaschine erfolgen.

Bei wenig verflochtenem Fasermaterial, wie z.B. Kissenfüllungen, kann der Faserballen einfach auseinandergezogen werden und somit mit möglichst geringer Höhe auf dem Untergrund verteilt werden. Dadurch wird eine möglichst umfassende Benetzbarkeit der Fasern durch ein Desinfektionsmittel oder durch eine Bestrahlung (thermisch oder UV oder dergleichen) erreicht.

### C Desinfizieren des Fasermaterial

An das Verteilen des Fasermaterial schließt sich der Schritt der Desinfektion an. Dabei bleiben die Fasern im Wesentlichen erhalten, allerdings kann chemische Desinfektion durch ein Desinfektionsmittel und/oder eine physikalische Desinfektion erfolgen. Die Fasern können dabei mehrfach z.B. durch richtungswechselnde Transportbänder, gewendet werden und somit mehrfach dem Desinfektionsschritt unterzogen werden.

### D Zuführen des Fasermaterials in einem Filtermediumsbildungsprozess, insbesondere einem Vliesbildungsprozess, wobei das desinfizierte Fasermaterial auf eine Substratlage aufgebracht wird und/oder verfestigt wird jeweils unter Ausbildung einer Feinfiltermedium; vorzugsweise eines Vliesstoffes

Im Fall einiger Fasern kann es vorkommen, dass das Fasermaterial nicht hinreichend verdichtet werden kann. Zumindest kann dieses Material als Zuschlagmaterial zu virgin-Fasern eingesetzt werden, um den Bedarf an virgin-Fasern im Produktionsprozess zu verringern. Es ist allerdings auch möglich, je nach Art der Recyclatfasern, dass das Feinfiltermedium oder sogar die gesamte Atemschutzmaske vollständig aus Recyclatfasern besteht. Eine Verfestigung zu einem Vliesstoff, z.B. als Vliesverfestigung, ist im Fall der Substratlage nicht zwingend notwendig. Sofern allerdings das gebildete Feinfiltermedium der einzige mundabdeckende Bestandteil der Atemschutzmaske ist, so ist eine Vliesverfestigung bevorzugt. Die Substratlage kann zugleich eine Stützlage sein. Es können auch zwei Stützlagen vorgesehen sein mit dem dazwischen angeordneten Fasermaterial.

### E Zuschnitt eines mundabdeckenden Segments des Feinfiltermediums, sowie Ausbildung einer Atemschutzmaske aus dem vorgenannten Segments

Schließlich erfolgt der Zuschnitt z.B. eines rechteckigen Segments, welches wahlweise als Einlage z.B. in einer Stoffmaske oder mit Halteelementen versehen direkt als Atemschutzmaske eingesetzt werden kann.

Vorteilhafte Ausgestaltungen des Verfahrens sind Gegenstand der Unteransprüche.

Die in Schritt A) bereitgestellten Faser können als sogenannte Vor- oder Nachverbraucher-Fasern (pre-consumer waste, post-consumer waste) ausgebildet sein. Sie stammen jedoch vorzugsweise aus verbrauchsfertigen Produkten. Beim Fasermaterial kann es sich um Textilfasern, Füllfasern, beispielsweise für Kissen oder Decken, Fasern aus Vliesstoffen, sowie unverbrauchte Textilien und Vliesstoffe aus Lagerbeständen handeln.

In Schritt A kann ein faserhaltiges Material zerrissen und, ggf. durch weitere Verfahrensschritte, zu einem unverfestigten Fasergefüge bzw. zu dem vorgenannten Material aus zu recyclenden Fasern zerkleinert werden.

Das Fasergefüge in Schritt B) kann für eine möglichst umfassende Benetzung mit einer durchschnittlichen Schichtdicke von maximal 3 cm auf dem Untergrund, z.B. dem Transportband, verteilt werden.

Das Desinfizieren nach Schritt B) kann z.B. durch Auftrag eines Desinfektionsmittels, vorzugsweise eines antiviralen Desinfektionsmittels, und/oder durch Wärme und/oder UV-Behandlung erfolgen.

Das Zuführen des Fasermaterials in Schritt D) in einem Vliesbildungsprozess kann als Zuschlagmaterial erfolgen, derart, dass die desinfizierten Recyclatfasern zu virgin-Fasern zugegeben werden, so dass das gebildete Feinfiltermedium zumindest 5 Gew.% an Recyclatfasern aufweist.

Das in Schritt D) gebildete Feinfiltermedium, insbesondere in der Ausgestaltung als Vliesstoff, kann einlagig ausgebildet sein.

Das in Schritt D) gebildete Feinfiltermedium kann mit mehreren Teillagen ausgebildet sein und vorzugsweise mit zwei Stützlagen und eine dazwischen Feinfilterlage aufweisen.

Das Feinfiltermedium, insbesondere in der Ausgestaltung als Vliesstoff, kann mechanisch und/oder thermisch verfestigt ausgebildet sein.

Die Ausbildung einer Atemschutzmaske kann durch Einlegen und/oder Festlegen des zugeschnittenen Feinfiltermediums an einen textilen Maskenkorpus erfolgen, welcher zudem mit Haltemitteln versehen ist, so dass die Schutzmaske zumindest aus der Feinfiltermedium, insbesondere in der Ausgestaltung als Vliesstoff, und dem textilen Maskenkorpus gebildet wird.

Die Ausbildung der Atemschutzmaske kann durch Anbringen von Haltemitteln am zugeschnittenen Vliesstoff erfolgen, so dass die Schutzmaske lediglich durch das Feinfiltermedium, insbesondere in der Ausgestaltung als Vliesstoff, und die Haltemittel gebildet wird.

Weiterhin erfindungsgemäß ist eine Atemschutzmaske mit einem Feinfiltermedium umfassend zumindest einen Mindestanteil an Recyclatfasern.

Die Recyclatfasern müssen nicht zwingend, können jedoch vorteilhaft, aus einem bereitgestellten zu recyclenden Fasermaterial, vorzugsweise nach dem erfindungsgemäßen Verfahren, durch Desinfektion bereits verwendeter Fasern gewonnen werden.

Allerdings kann auch ein Altpapier-Airlaid Material als Recylatfasermaterial in erfindungsgemäßen Atemschutzmasken verwendet werden.

Recyclingfasern bzw. Recyclatfasern können auch im Rahmen der vorliegenden Erfindung, allerdings weniger bevorzugt, z.B. durch Granulierung und Aufarbeitung von Recyclingkunststoffen hergestellt werden, wobei in diesem Fall die Herstellung einer herkömmlichen Vliesbildung entsprechend kann mit dem Unterschied des verwendeten Ausgangsmaterials. Dabei kann es sich beim Ausgangsmaterial um:
Pre-consumer Abfälle, Post-consumer Abfälle, Social Plastic, social Wertstoffe, Meeres-Plastik, einschließlich Plastik aus Süsswasser wie Flüssen und Seen, Deponie-Plastik, Altanlagen Plastik, Wertstoffe aus der Verwertung von gebrauchten Fahrzeugen, Maschinen und/oder Haushaltsgeräten, Baukunststoffe und Wertstoffe aus Abrissarbeiten, sowie Agrarabfälle.

Dabei sind Social Plastic und social Wertstoff insbesondere Stoffe, die vorzugsweise in Entwicklungsländern oder gemäß Sozialprogrammen wie 1 Euro Jobs) aus dem verstreuten Müll selektiv gesammelt werden, sortiert, gereinigt und in eine transportable Form gebracht werden z.B. Folienballen oder Kunststoffgranulat und die den Arbeitern ein Einkommen verschaffen und deren Kindern Schulbildung an Stelle von Müllsammeln.

Meeres Plastik ist gezielt aus dem Meer oder Flüssen oder Stränden/Flussufern eingesammeltes oder mit Netzen/geeigneten Vorrichtungen gefischtes Plastik und Wertstoffe, die einer Weiterverwendung/Recycling zugeführt werden.

Deponie-Plastik ist an sich bekannt und kann gezielt aus aktuell genutzten oder bereits geschlossenen Mülldeponien oder anderen Lagerstätten gefördertes Altplastik und Alt-Wertstoffe, die sortiert, gereinigt und einer Weiterverwendung/Recycling zugeführt werden.

Abrissarbeiten umfasst insbesondere die Verwertung von Abfällen von abgerissenen Bauwerken

Agrarabfälle sind insbesondere Agrarkunststoffe und Wertstoffe, die nach Nutzung in der Agrarwirtschaft üblicherweise als Abfall anfallen, wie Abdeckplanen und Abdeckvliese, Strohballen-Seile usw.

Die Verwendung von Recyclatfasern ermöglicht dabei insbesondere die Wiederverwendung von Kunststoffen oder bereits verarbeiteten Naturmaterialien, welche dadurch nicht erst neu z.B. aus erdölbasierten Rohstoffen hergestellt werden müssen sondern unmittelbar aus bereits einmalig oder mehrmalig verwendete Material nochmals ressourcenschonend einer neuen Verwendung zugeführt werden. Dabei ist überraschend, dass trotz einer gewissen Verschmutzung durch die Erstverwendung eine hinreichend gute Qualität an Fasern für den Einsatz als Feinfiltermaterial in Atemschutzmasken herstellbar ist.

Die Recyclatfasern weisen daher vorzugsweise einen Anteil an Fremdmaterial von zumindest > 0,1 Gew % auf, welches im Fall von Granulierung und Neuausformung der Fasern im Fasermaterial eingeschlossen sein kann und im Fall der Verwendung gebrauchter Fasern auf der Oberfläche der Fasern anhaftet

In einer ersten Ausführungsvariante kann die Atemschutzmaske einen Maskenkörper, z.B. eine Stoffmaske oder eine Maske mit einem kartonageartigen Stützkörper, aus einem textilen Material, der bei einer Person über Nase und Mund anlegbar und an der Person über Haltemittel fixierbar ist.

Weiterhin kann das Feinfiltermedium einen Mindestanteil an Recyclatfasern im Feinfiltermedium zumindest 5 Gew.%, bezogen auf das Gesamtgewicht des Feinfiltermediums, vorzugsweise zumindest 20 Gew.%, bezogen auf das Gesamtgewicht des Feinfiltermediums, beträgt.

Das bevorzugte Flächengewicht des vorgenannten Feinfiltermediums kann zwischen 10 g/m² bis 120 g/m² betragen.

Bevorzugt ist die Atemschutzmaske nach dem vorgenannten erfindungsgemäßen Verfahren hergestellt, so dass zumindest ein Anteil an Fasern oder auch sämtliche Fasern im Filtermedium nicht erst ausgeformt werden müssen sondern der Schritt der Faserbildung z.B. Meltblowing, vorteilhaft vollständig entfallen kann oder zumindest in geringerem Umfang betrieben werden muss. Dies schon den CO₂-Bedarf zur Herstellung der Atemschutzmaske und macht diese somit umweltfreundlicher.

Die Erfindung wird nachfolgend anhand eines Ausführungsbeispiels mit Bezug auf die beigefügten Zeichnungen näher erläutert. Es zeigen:

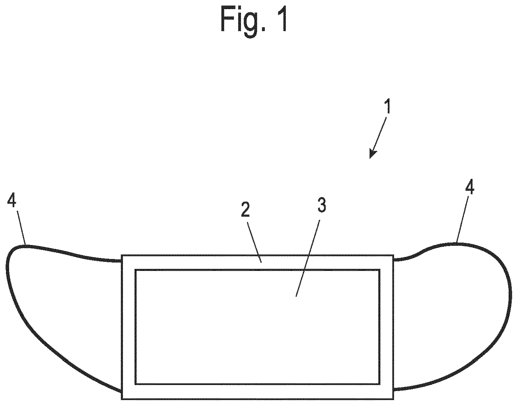

- Figur 1: eine Ansicht einer erfindungsgemäßen Atemschutzmaske und
- Figur 2: ein Schaubild zu einem erfindungsgemäßen Herstellungsverfahren.

Die vorliegende Erfindung nutzt die Begriffe Feinfiltermedium und Feinfilterlage. Während ein Feinfiltermedium mehrere weitere Lagen, beispielsweise eine Stützlage, umfassen kann, weist die Feinfilterlage ausschließlich Material zur Feinfilterung von Tröpfchen und anderen Atembestandteilen mit einer Größe von mehr als 0,5 µm, insbesondere 0,6 µm oder mehr, auf.

Eine Atemschutzmaske 1 umfasst einen Maskenkörper 2 aus einem textilen Material, der über Haltemittel 4 an einer Person befestigbar ist. Der Maskenkörper 2 ist als rechteckiger Zuschnitt ausgebildet, kann aber auch eine andere Form haben. Die Haltemittel 4 sind durch Schlaufen gebildet, die um ein Ohr einer Person anlegbar sind. Optional können die Haltemittel 4 auch um den Nacken einer Person herumgeführt werden und beispielsweise aus einem elastischen Band hergestellt sein.

Der Maskenkörper 2 aus textilem Material kann aus einem Baumwollstoff, Polymerstoff oder einem Stoff aus Mikrofasern hergestellt sein und ist wiederverwendbar. Durch Waschen kann der textile Maskenkörper gereinigt werden. Um die Filtrationsleistung der Atemschutzmaske 1 zu erhöhen, ist an dem Maskenkörper 2 eine flächige Einlage 3 als Feinfilter lösbar fixiert, die durch einen Waschvorgang beschädigt würde.

Die Einlage 3 umfasst eine Schicht Meltblown, die vorzugsweise zwischen zwei Stützlagen angeordnet ist. Eine solche Lage Meltblown besitzt meist eine geringe mechanische Festigkeit, so dass vorzugsweise auf beiden Seiten der Lage Meltblown eine Stützschicht vorgesehen ist, beispielsweise aus einem Spinnvlies, Scrim, einem Netting, einer luftdurchlässigen perforierten Kunststofffolie oder einem Gewebe. Die Einlage 3 ist dabei als rechteckiger Zuschnitt ausgebildet und nimmt eine Fläche ein, die mindestens 50 %, vorzugsweise zwischen 70 % bis 98 % der Fläche des Maskenkörpers 2 entspricht, so dass über die Einlage 3 ebenfalls Mund und Nase abgedeckt werden.

Eine Ausführungsvariante der vorliegenden Erfindung ist, dass die Stützschicht wie Spinnvlies oder Spunbond oder die Feinfilterlage wie Meltblown als Recyclatfasern ausgebildet sind, also ganz oder zumindest anteilig aus wiederaufbereiteten Abfall-Kunststoffen hergestellt wurden. Entsprechend können die Fasern in geringen Konzentrationen Einschlüsse von Fremdmaterial aufweisen.

Alternativ kann in einer zweiten Ausführungsvariante zusätzlich zu den Meltblownfasern auch desinfizierte Recyclatfasern zugesetzt sein, welche im Herstellungsprozess als bereits bestehende Fasern den neu-ausgeformten Meltblown-Fasern zugesetzt werden. Auch diese können vorzugsweise in geringen Konzentrationen, vorzugsweise oberflächlich, Fremdmaterial aufweisen.

Die Einlage 3 haftet an dem Maskenkörper 2 vorzugsweise über eine elektrostatische Aufladung der Einlage 3, beispielsweise durch Corona-Entladung oder Hydrocharging. Durch die Aufladung lässt sich die Einlage 3 ohne weitere Haftmittel an dem textilen Maskenkörper 2 lösbar fixieren. Optional können an dem Maskenkörper 2 oder der Einlage 3 auch andere Haftmittel eingesetzt werden, beispielsweise Klebeflächen oder Klettflächen. Zudem können auch mechanische Befestigungsmittel eingesetzt werden, wie Klammern oder Zugbänder.

Die Einlage kann beispielsweise Abmessungen in Längsrichtung zwischen 15 cm bis 22 cm und in Höhenrichtung zwischen 11 cm bis 17 cm aufweisen. Eine solche Einlage kann auch an einem anderen Maskenkörper 2 eingesetzt werden, beispielsweise einem Maskenkörper, der durch einen Schal oder ein anderes Bekleidungsstück hergestellt wird.

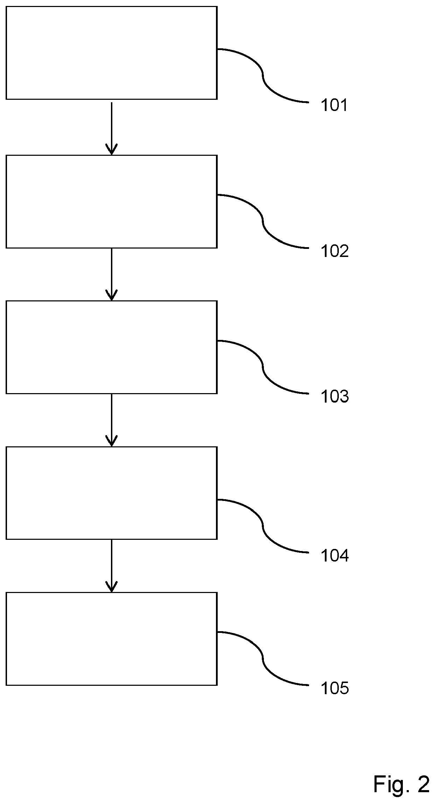

Eine Ausführungsvariante eines Verfahrens zur Herstellung von Atemschutzmasken unter Verwendung von recycliertem Fasermaterial wird anhand von Fig. 2 offenbart.

Zunächst kann ein Material aus zu recyclenden Fasern bereitgestellt in einem ersten Schritt 101 werden. Dabei kann es sich beispielsweise um Kissenfüllung aus Vlies handeln.

Die Vliesfasern werden nach ihrer Benutzung auf einem Transportband als Untergrund in einem zweiten Schritt 102 verteilt, so dass sich eine durchschnittliche Bedeckungshöhe bzw. Schichtdicke in einem Bereich von vorzugsweise zwischen 0,2 bis 1,5 cm einstellt.

Sodann erfolgt das Desinfizieren 103 des Fasermaterials. Im konkreten Fall kann das Vlies mit einem Desinfektionsmittel besprüht werden und anschließend in einer Lufttrocknung bei weniger als 100°C, insbesondere weniger als 80°C, getrocknet werden.

Sodann erfolgt ein Zuführen 104 des Fasermaterials in einem Feinfilterbildungsprozess, wobei das desinfizierte Fasermaterial auf eine Substratlage in Form einer Stützlage aufgebracht wird und anschließend verfestigt wird unter Ausbildung eines Feinfiltermediums umfassend die Stützlage und die Feinfilterlage. Das Verhältnis an desinfizierten recycelten Fasermaterial gegenüber virgin-Fasern in der Feinfilterlage beträgt 30 Gew.%. Die Stützlage kann beispielsweise als Netzstruktur, vorzugsweise mit einer Maschenweite von zumindest 0,5 mm², insbesondere mit einer Maschenweite von 1 mm², ausgebildet sein, was das Atmen zusätzlich erleichtert.

Die das Feinfiltermedium mit den vorgenannten Lagen können zusätzlich durch eine weitere artgleiche Stützlage ergänzt werden, so dass die Feinfilterlage zwischen den beiden Stützlagen angeordnet ist.

Schließlich erfolgt der Zuschnitt in der eines mundabdeckenden Feinfiltersegments aus dem Feinfiltermedium, sowie Ausbildung einer Atemschutzmaske aus dem vorgenannten Feinfiltersegments.

Das Vorsehen der Stützlage und/oder das Verfestigen kann zudem eine Verringerung der Gesamtleckage gemäß DIN EN 149 von weniger als 11 %, vorzugsweise weniger als 8% ermöglichen.

### Bezugszeichenliste

- 1: Atemschutzmaske
- 2: Maskenkörper
- 3: Einlage
- 4: Haltemittel

## Patentansprüche

1. Verfahren zur Herstellung von Atemschutzmasken unter Verwendung von recyclierten Fasermaterial, **gekennzeichnet, durch** die folgenden Schritte:
A) Bereitstellen eines Materials aus zu recyclenden Fasern
B) Verteilen der Fasern auf einem Untergrund
C) Desinfizieren des Fasermaterial
D) Zuführen des Fasermaterials in einem Feinfilterbildungsprozess, wobei das desinfizierte Fasermaterial auf eine Substratlage aufgebracht wird und/oder verfestigt wird unter Ausbildung eines Feinfiltermediums;
E) Zuschnitt eines mundabdeckenden Feinfiltersegments aus dem Feinfiltermedium, sowie Ausbildung einer Atemschutzmaske aus dem vorgenannten Feinfiltersegments.

2. Verfahren nach Anspruch 1, **dadurch gekennzeichnet, dass** die in Schritt A) bereitgestellten Faser sogenannte Vor- oder Nachverbraucher-Fasern sind, insbesondere Textilfasern, Füllfasern, beispielsweise für Kissen oder Decken, Fasern aus Vliesstoffen, sowie unverbrauchte Textilien und Vliesstoffe aus Lagerbeständen sind.

3. Verfahren nach Anspruch 1 oder 2, **dadurch gekennzeichnet, dass** in Schritt A ein faserhaltiges Material zerrissen und, ggf. durch weitere Verfahrensschritte, zu einem unverfestigten Fasergefüge zerkleinert wird

4. Verfahren nach einem der vorhergehenden Ansprüche, **dadurch gekennzeichnet, dass** das Fasergefüge in Schritt B) mit einer durchschnittlichen Schichtdicke von maximal 3 cm auf dem Untergrund verteilt wird.

5. Verfahren nach einem der vorhergehenden Ansprüche, **dadurch gekennzeichnet, dass** das Desinfizieren nach Schritt B) durch Auftrag eines Desinfektionsmittels, vorzugsweise eines antiviralen Desinfektionsmittels, und/oder durch Wärme und/oder UV-Behandlung erfolgt.

6. Verfahren nach einem der vorhergehenden Ansprüche, **dadurch gekennzeichnet, dass** das Zuführen des Fasermaterials in Schritt D) in einem Vliesbildungsprozess als Zuschlagmaterial erfolgt, derart, dass die desinfizierten Recyclatfasern zu virgin-Fasern zugegeben werden, wo der gebildete Vliesstoff zumindest 5 Gew.% an Recyclatfasern aufweist.

7. Verfahren nach einem der vorhergehenden Ansprüche, **dadurch gekennzeichnet, dass** der in Schritt D) gebildete Vliesstoff einlagig ausgebildet ist.

8. Verfahren nach einem der vorhergehenden Ansprüche, **dadurch gekennzeichnet, dass** das in Schritt D) gebildete Feinfiltermedium mehrlagig ausgebildet ist und vorzugsweise mit zwei Stützlagen und einer dazwischen angeordneten Feinfilterlage ausgebildet ist.

9. Verfahren nach einem der vorhergehenden Ansprüche, **dadurch gekennzeichnet, dass** der das Feinfiltermedium mechanisch und/oder thermisch verfestigt ausgebildet wird.

10. Verfahren nach einem der vorhergehenden Ansprüche, **dadurch gekennzeichnet, dass** die Ausbildung einer Schutzmaske durch Einlegen und/oder Festlegen des zugeschnittenen Feinfiltermediums an einen textilen Maskenkorpus erfolgt, welcher zudem mit Haltemitteln versehen ist, so dass die Schutzmaske zumindest aus dem Feinfiltermedium und dem textilen Maskenkorpus gebildet wird.

11. Verfahren nach einem der vorhergehenden Ansprüche, **dadurch gekennzeichnet, dass** die Ausbildung der Atemschutzmaske durch Anbringen von Haltemitteln am zugeschnittenen Vliesstoff, so dass die Schutzmaske lediglich durch den Vliesstoff und die Haltemittel gebildet wird.

12. Atemschutzmaske (1) mit einem Feinfiltermedium umfassend zumindest einen Mindestanteil an Recyclatfasern.

13. Atemschutzmaske (1) nach Anspruch 12, **dadurch gekennzeichnet, dass** der Mindestanteil an Recyclatfasern im Feinfiltermedium zumindest 5 Gew.%, bezogen auf das Gesamtgewicht des Feinfiltermediums, vorzugsweise zumindest 20 Gew.%, bezogen auf das Gesamtgewicht des Feinfiltermediums, beträgt.

14. Atemschutzmaske nach Anspruch 12 oder 13, **dadurch gekennzeichnet, dass** das Flächengewicht des Feinfiltermediums zwischen 10 g/m² bis 120 g/m² beträgt.

15. Atemschutzmaske (1) nach einem der vorhergehenden Ansprüche 12 bis 14, **dadurch gekennzeichnet, dass** sie hergestellt ist nach einem Verfahren nach einem der vorhergehenden Ansprüche.
